# EUROPEAN PATENT SPECIFICATION

(11) **EP 3 707 034 B1**
(45) Date of publication and mention of the grant of the patent: **11.03.2026**
(21) Application number: 18877070.5
(22) Date of filing: 06.11.2018
(51) Int. Cl.: B60R 25/04, B60R 25/20

(54) **A MULTI-FUNCTION SMART IGNITION LOCK FOR VEHICLES**
INTELLIGENTES MULTIFUNKTIONS-ZÜNDSCHLOSS FÜR FAHRZEUGE
VERROU D'ALLUMAGE INTELLIGENT MULTIFONCTION POUR VÉHICULES

(30) Priority: 07.11.2017 IN 201711037298
(43) Date of publication of application: 16.09.2020
(73) Proprietor: Minda Corporation Limited, Noida (IN)
(72) Inventor: PURI, Vikram, Noida (IN); GOSWAMI, Deepak, Noida (IN); SETH, Bhanu, Noida 201301 (IN)
(74) Representative: Crippa, Paolo Ernesto
(86) International application number: PCT/IN2018/050718
(87) International publication number: WO 2019/092740

(56) References cited:
- EP-A1- 1 520 757
- EP-A2- 2 020 345
- WO-A1-2015/092754
- JP-A- 2009 293 389
- JP-A- 2009 293 389
- KR-A- 20070 062 209
- US-A1- 2004 129 041
- US-A1- 2005 115 757
- US-B1- 7 299 669

## Description

### TECHNICAL FIELD

The present disclosure generally relates to the field of automobiles. Particularly, but not exclusively, the present disclosure relates to the construction and mechanism of a multi-function smart ignition lock for vehicles that has hands free unlocking operation, when an authentic electronic key is brought in the vicinity. Further, embodiments of the present disclosure disclose a multi-function smart ignition lock that is configured to operate a peripheral lock of the vehicle.

### BACKGROUND OF THE PRESENT DISCLOSURE

The information in this section merely provides background information related to the present disclosure and may not constitute prior art(s).

Generally, vehicles such as, but not limited to, two-wheelers such as bikes, scooters and the like are provided with locks for locking the handle bar of the vehicle. Such locks generally comprise a locking means and an external key to lock/unlock the handle bar of the vehicle. With an advancement in technology, in order to eliminate such manual operation by using a physical key, manufacturers have provided vehicles with electronic locks that can be opened without a physical key. However, a major drawback of such electronic locks is that the user has to still use a physical key for opening peripheral locks of the vehicle. Such peripheral locks may comprise seat locks, fuel tank locks and the like.

With the ongoing efforts, a number of arrangements have been proposed whereby separate switches have been provided to regulate peripheral locks electronically. However, a major disadvantage of such switching mechanisms is that they have to be incorporated separately on the vehicle. Therefore, such arrangements require additional space and are not economical, thereby resulting in limited application.

In other words, the researchers are constantly working to develop a technically advanced multi-function smart ignition lock for vehicles which eliminates one or more problems identified above. More specifically, a multi-function smart ignition lock that provides keyless operation of the peripheral locks of the vehicle. Patent document US 2005/0115757 Al discloses a relevant vehicle locking apparatus.

### SUMMARY

One or more drawbacks of conventional steering locks as described in the prior art are overcome and additional advantages are provided through a multi-function smart ignition lock as claimed in the present disclosure. Additional features and advantages are realized through the technicalities of the present disclosure. Other embodiments and aspects of the disclosure are described in detail herein and are considered to be a part of the claimed disclosure. The aforementioned goals are achieved by means of a multi-function smart ignition lock for vehicles according to claim 1. Preferred embodiments are defined in dependent claims 2-6.

According to the invention, there is provided a multi-function smart ignition lock for vehicles. The said ignition lock comprises a knob being disposed in a housing. The knob is configured to be rotatable about a longitudinal axis YY between a plurality of switching positions. The knob is further configured to be movable along axis YY in a downward direction at a pre-determined position of the one or more switching positions. A rotor is rotatably coupled with the knob. The rotor is configured to operate a lock bar to selectively lock/unlock a handle bar of the vehicle. The ignition lock further comprises at least one micro-switch, a control unit and a solenoid. The solenoid is configured to drive a lever. The lever is engageable with the rotor to selectively restrict the rotation of the rotor. A rotary actuator is selectively engageable with the rotor. The rotary actuator is configured to operate one or more peripheral locks of the vehicle.

In an embodiment, the rotor comprises slots extending downwardly along the axis YY.

In an embodiment, the slots are selectively engageable with the rotary actuator through a plurality of projections being formed in a central hole surface of the rotary actuator.

In an embodiment, the rotary actuator is connected with an actuation cable for operating the one or more peripheral locks of the vehicle.

In an embodiment, the rotor comprises a cam portion extending downwardly along the axis YY.

In one embodiment, the cam portion of the rotor is connected to a slide plate, the slide plate being configured to translate linearly upon rotation of the rotor.

In an embodiment, the slide plate is connected with the lock bar and is configured to operate the lock bar translationally upon rotary movement of the rotor.

In one embodiment, the solenoid lever is energized by lever spring to be normally engaged in slot of the rotor, the rotor being restricted from rotating in the engaged position of the lever.

According to the invention, the microswitch is actuated by the actuating bottom face of the knob when the knob is pushed in the downward direction by a user.

According to the invention, the microswitch, upon being actuated, activates the control unit, the control unit being configured to identify an authentic key through RFID communication.

According to the invention, the control unit activates the solenoid upon identification an authentic key.

According to the invention, the solenoid, upon activation, drives the lever to a disengaged position with respect to slot of the rotor; the rotor being rotatable in the disengaged position of the lever.

In addition to the illustrative aspects, embodiments, and features described above, further aspects, embodiments, and features will become apparent with reference to the drawings and the following detailed description.

### BRIEF DESCRIPTION OF THE ACCOMPANYING DRAWINGS

The novel features and characteristics of the disclosure are set forth in the appended description. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** depicts a perspective view of the multi-function smart ignition lock in accordance with the present disclosure.
**Figure 2** illustrates an exploded view of the multi-function smart ignition lock of

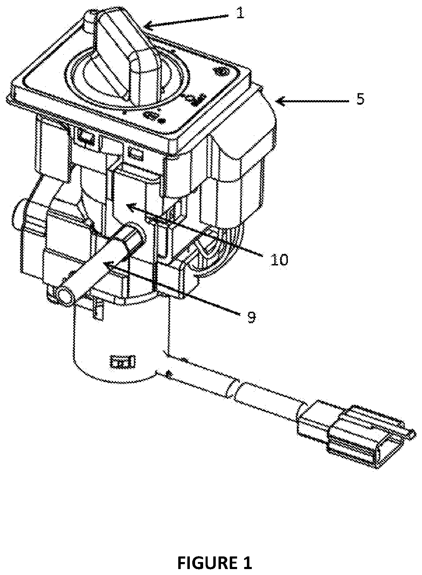

Figure 1, according to an embodiment of the present disclosure.

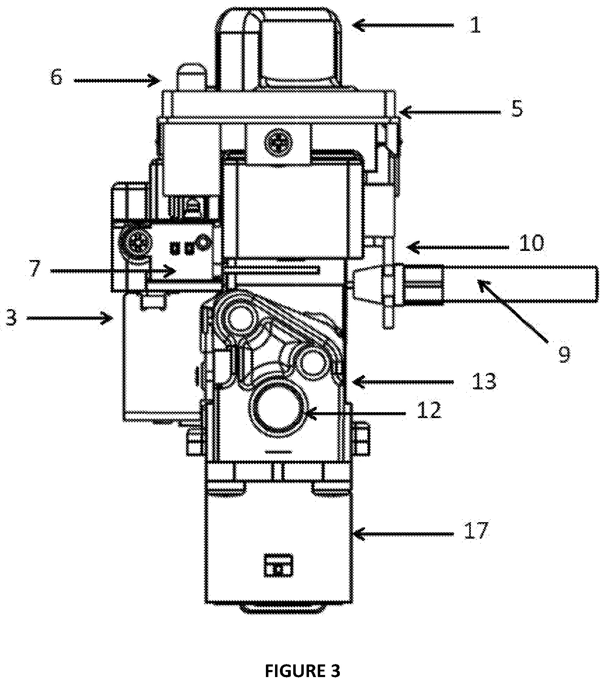

**Figure 3** depicts a front view of the multi-function smart ignition lock, according to an embodiment of the present disclosure.

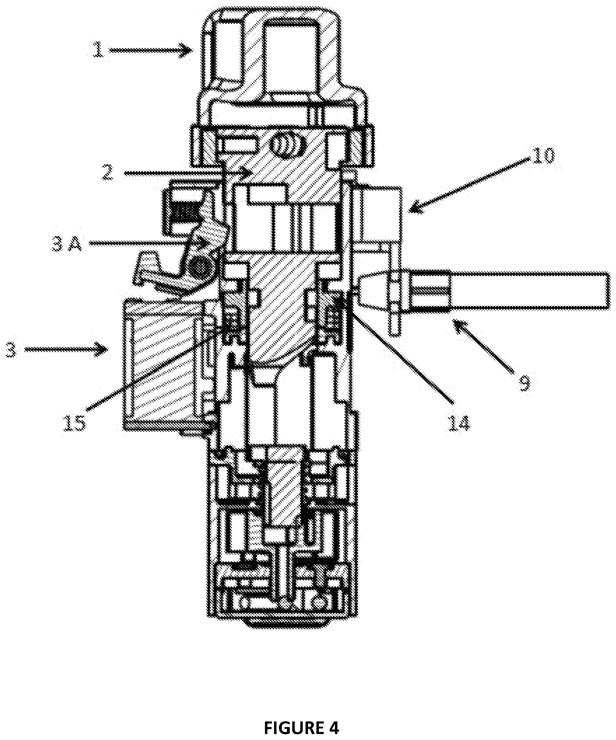

**Figure 4** depicts a section view of the multi-function smart ignition lock, according to an embodiment of the present disclosure.

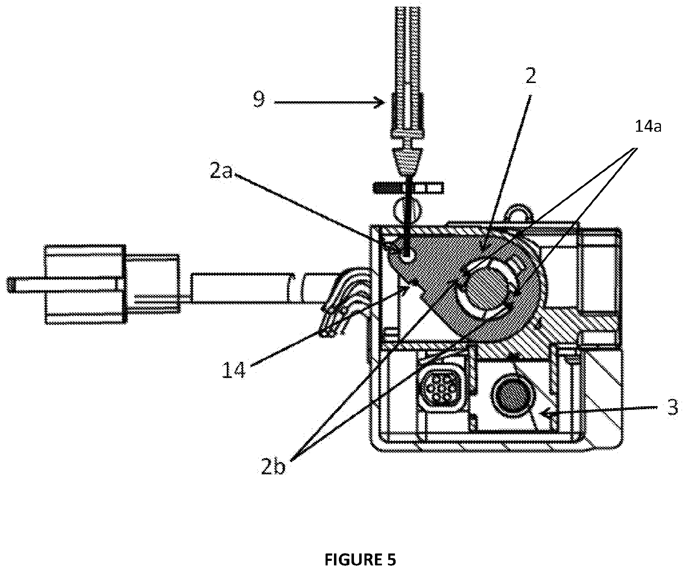

**Figure 5** illustrates a sectional view of the multi-function smart ignition lock of Figure 3, according to an embodiment of the present disclosure.

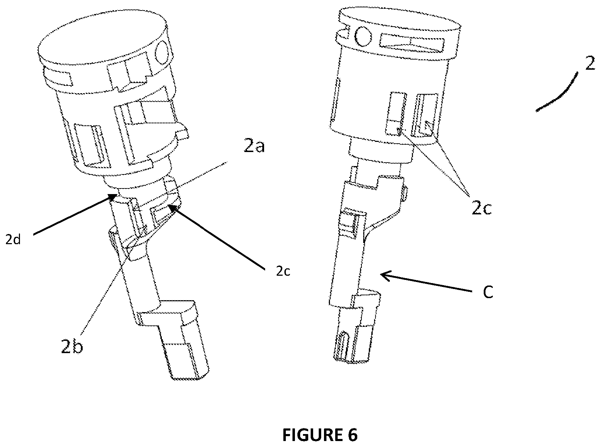

Figure **6** illustrates a perspective view of the rotor, according to an embodiment of the present disclosure.

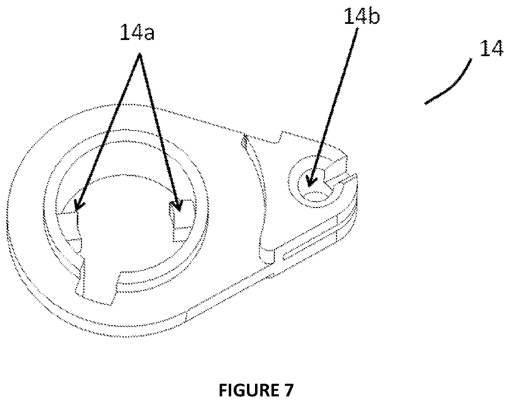

Figure **7** illustrates a perspective view of the rotary actuator, according to an embodiment of the present disclosure.

The figures depict embodiments of the disclosure for purposes of illustration only. One skilled in the art will readily recognize from the following description that alternative embodiments of the assemblies and methods illustrated herein may be employed without departing from the principles of the disclosure described herein.

### DETAILED DESCRIPTION

While the invention is subject to various modifications and alternative forms, specific embodiment thereof has been shown by way of example in the figures and will be described below. It should be understood, however that it is not intended to limit the invention to the particular forms disclosed. The invention is defined by the appended claims.

Before describing in detail, the various embodiments of the present disclosure it may be observed that the novelty and inventive step are in accordance with a multi-function smart ignition lock for vehicles. It is to be noted that a person skilled in the art can be motivated from the present disclosure and can perform various modifications.

Accordingly, the drawings are showing only those specific details that are pertinent to understanding the embodiments of the present disclosure so as not to obscure the disclosure with details that will be readily apparent to those of ordinary skill in the art having benefit of the description herein.

The terms "comprises", "comprising", or any other variations thereof, are intended to cover a non-exclusive inclusion, such that an assembly, setup, system, device that comprises a list of components does not include only those components but may include other components not expressly listed or inherent to such system or device or setup. In other words, one or more elements in the system or apparatus or device proceeded by "comprises a" does not, without more constraints, preclude the existence of other elements or additional elements in the assembly or system or apparatus. The following paragraphs explain present disclosure. The invention in respect of the same may be deduced accordingly.

Accordingly, it is an aim of the present disclosure to provide an automated ignition lock that provides keyless operation of the peripheral locks of the vehicle.

Another aim of the present disclosure is to provide an automated ignition lock that is economical and compact in size so as to meet the space limitation in vehicles.

Accordingly, the present disclosure relates to a multi-function smart ignition lock for vehicles. The said ignition lock comprises a knob being disposed in a housing. The knob is configured to be rotatable about a longitudinal axis YY between a plurality of switching positions. The knob is further configured to be movable along axis YY in a downward direction at a pre-determined position of the one or more switching positions. A rotor is rotatably coupled with the knob through a clutch mechanism for free-wheeling above a pre-determined torque of knob. The rotor is configured to operate a lock bar to selectively lock/unlock a handle bar of the vehicle. The ignition lock further comprises at least one micro-switch, a control unit and a solenoid. The solenoid is configured to drive a lever. The lever is engageable with the rotor to selectively restrict the rotation of the rotor. A rotary actuator is selectively engageable with the rotor. The rotary actuator is configured to operate one or more peripheral locks of the vehicle. The rotor comprises slots extending downwardly along the axis YY. The slots are selectively engageable with the rotary actuator through a plurality of projections being formed in a central hole of the rotary actuator. The rotary actuator is connected with an actuation cable for operating the one or more peripheral locks of the vehicle. The rotor comprises a cam portion extending downward along YY axis. The cam portion of the rotor is connected to a slide plate, the slide plate being configured to translate linearly upon rotation of the rotor. The slide plate is connected with the lock bar and is configured to operate the lock bar translationally upon rotary movement of the rotor. The lever is energized by solenoid lever spring to be normally engaged in slot of the rotor, the rotor being restricted from rotating in the engaged position of the lever. The knob comprises an actuating face. The microswitch is actuated by the actuating face at bottom when the knob is pushed in the downward direction by a user. The microswitch, upon being actuated, activates the control unit, the control unit being configured to identify an authentic key through RFID communication. The control unit actuates the solenoid upon identification an authentic key. The solenoid, upon actuation, drives the lever to a disengaged position with respect to slot of the rotor; the rotor being rotatable in the disengaged position of the lever.

Reference will now be made to a keyless steering lock which is explained with the help of figures. The figures are for the purpose of illustration only and should not be construed as limitations on the assembly and mechanism of the present disclosure. Wherever possible, referral numerals will be used to refer to the same or like parts.

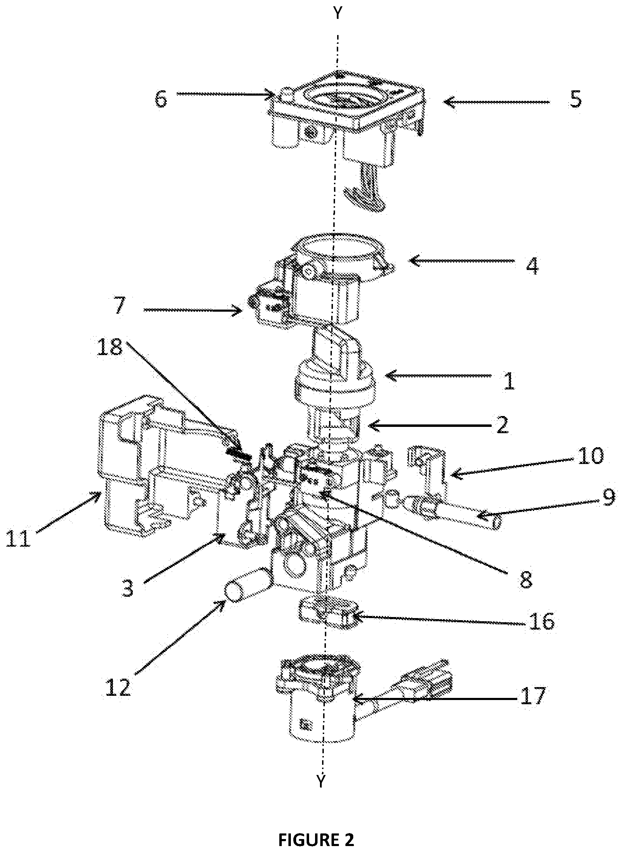

Referring to Figures 1 to 7, there is provided a multi-function smart ignition lock being mountable on a steering column of the vehicle. In an exemplary embodiment, the multi-function smart ignition lock comprises, amongst other components, a housing for accommodating the one or more components of the said lock. A knob (1) is disposed in the housing. In the mounted condition, a head portion of the knob (1) is disposed externally to the housing for being operated by a user. In the mounted condition, the knob (1) is configured to be rotatable about a longitudinal axis YY between a plurality of switching positions. In a non-limiting embodiment, the one or more switching positions of the knob correspond to the "LOCK", "OFF" and "ON" conditions of the vehicle. Additionally, there may be provided an additional position for operating "SEAT LOCK" and/or "FUEL TANK LOCK" of the vehicle.

The said ignition lock further comprises a rotor (2) being rotatably coupled with the knob (1). The rotor is configured to operate a lock bar (12) to selectively lock/unlock a handle bar of the vehicle. Disposed below the rotor (2) comprising at least one micro-switch (8), control unit and a solenoid (3) being configured to drive a solenoid lever (3A). In the mounted condition, the solenoid lever (3A) is adapted to be operationally engaged with the rotor slots (2c) at rotor (2) and restrict its rotation. The ignition lock comprises a cover (4), a slide plate (16) being operationally configured with rotor (3), lock bar (12) and electrical switch assembly (17). The multi-function smart ignition lock further comprises an optical housing (5), a peripheral lock opener button (6), a secondary micro switch (7), an actuation cable (9), cable clamp (10), a solenoid cover (11), a rotary actuator (14) and auto return resilient means (15). The rotary actuator (14) is selectively engageable with the rotor (2). In a non-limiting embodiment, the rotary actuator (14) is configured to operate one or more peripheral locks of the vehicle.

In an embodiment, the rotor (2) comprises a cam shaft extending downwardly along the axis YY. The said slots (2b) is selectively engageable with the rotary actuator (14) through a plurality of projections (14a) being formed in a central hole (14b) of the rotary actuator (14). The rotary actuator (14) may be connected with an actuation cable (9) for operating the one or more peripheral locks of the vehicle. The said rotary actuator is engaged with a resilient means (15) to auto return the rotary actuator (14) after cable actuation.

The solenoid assembly is attached on one side of the housing (13) and is covered by solenoid cover (11). The first micro switch (8) is mounted on the housing (13). In an embodiment the second micro switch (7) is mounted on the cover (4) which forms an encapsulation with the housing (13). The cam portion (C) of the rotor (2) is connected to a slide plate (16). The slide plate (16) is configured to translate linearly upon rotation of the rotor (2). In one embodiment, the slide plate (16) moves laterally in a direction perpendicular to the lock bar (12), in the same horizontal plane. In the locked condition, the lock bar (12) protrudes from the housing (13) and engages with the handle bar of the vehicle. For the purpose of simplicity, the drawings do not show the handle bar or the vehicle. The slide plate (16) is connected with the lock bar (12); and is configured to operate the lock bar (12) translationally upon rotary movement of the rotor (2). In this position, lever (3A) is engaged with slot (2c) in the rotor (2). The lever (3A) is energized by lever spring (18) to be normally engaged in slot (2c) of the rotor (2) and restrict it from rotating about axis YY.

The knob (1) comprises an actuating face (1a). During operation of the said ignition lock, the micro switch (8) is actuated by the actuating face (1a) when the knob (1) is pushed in the downward direction by a user. The microswitch (8), upon being actuated, activates the control unit. The control unit in turn searches for an authentic key in the vicinity of the vehicle through RFID communication. In a preferred embodiment the control unit is an ECU. If the authentic key is found, the ECU sends a signal to the solenoid (3) to activate the lever (3A). On receiving an actuation signal from the ECU, the solenoid (3) drives the lever (3A) to a disengaged position with respect to slot (2c) of the rotor (2). This allows the knob (1) and rotor (2) to be rotatable. Rotating the knob (1) to OFF POSITION retracts the lock bar (12) inside the housing (13) through the slide plate (16), hence unlocking the handle bar of the vehicle. After a pre-determined time, the lever (3A) returns to its original state by under resilient action of lever spring (18) and is engaged in the rotor slot (2c), prohibiting further rotary motion of rotor (2).

To lock the handle bar from the unlocked condition, the knob (1) is pressed by the user to authenticate the correct user. The knob (1) presses the first micro switch (8) and activates the system. The ECU searches for the authentic electronic key in the vicinity. If the authentic key is found, the ECU sends a signal to the solenoid (3) to activate and retract the lever (3A), disengaging it from the rotor (2), hence allowing the knob (1) and rotor (2) to rotate. Pushing the knob at OFF position disengages the rotor with the actuator as projected arms (14a) are disengaged with the rotor face (2a). Hence, rotating the knob towards LOCK position after push moves the slide plate (16) linearly thereby projects the lock bar (12) outside the housing (13). The handle bar of the vehicle is locked. The lever (3A) of solenoid (3) returns back to its original state after a predetermined time by lever spring (18), thereby preventing further rotary motion of knob (1) and rotor (2).

For actuating the peripheral lock of the vehicle, the knob is rotated by the user at OFF Position towards seat unlock position. The knob (1) is operable only after authentication of the correct user. At OFF position the projected arms (14a) of the rotary actuator (14) are engaged with the rotor at one side face (2a). Rotating the knob (1) and rotor (2) towards SEAT/FUEL UNLOCK position from OFF position allow the actuator (14) to rotate along with rotor (2). The actuation cable (9) mounted with the cable clamp (10) is attached to the rotary actuator (14) at the hole (14b). As the rotary actuator (14) rotates along with the rotor (2), the actuation cable (9) is actuated, thereby operating the peripheral lock (in present embodiment seat lock). Upon opening the peripheral lock, the auto return spring (15) brings back the rotary actuator (14), rotor (2) and knob (1) back to its original position by resilient action.

To start the vehicle, the knob (1) is to be rotated towards IGNITION ON position after authentication of the correct user. At the IGNITION ON position the electrical switch (17) is closed condition and allows the user to start ignition.

At ignition OFF position the rotary actuator (14) is engaged with the rotor (2) through the slot face (2b) and projections (14a). The engagement allows the rotor to rotate the actuator in one direction only (i.e. seat open position). With the rotation of the knob towards Ignition ON position, the projection (14a) moves above the rotor slot face (2a).

Hence does not rotate the actuator (14) during ignition on operation. At ignition OFF position if the knob is pushed to operate the steering lock, the said projections (14a) moves in the slot.

Hence does not rotate the actuator (14) during steering lock operation.

In a non-limiting embodiment, the present multi-function smart ignition lock is further configured with a second peripheral lock. The second peripheral lock may be a fuel tank lock. As shown in figures, the second peripheral lock is actuated electronically by the peripheral lock opening switch (6). Peripheral lock opening switch (6) is disposed inside the optical housing (5). Pressing the peripheral lock opening switch (6) activates the second micro switch (7) which is mounted on the cover (4). The second micro switch (7) activates the system and ECU searches for the authentic electronic key in the vicinity. If the authentic key is detected, the ECU sends a signal to the electronic actuator attached to the said second peripheral lock and performs the unlocking operation.

**List of reference numerals:**

| | |
|---|---|
| 1 | Knob |
| 2 | Rotor |
| 2a | Rotor Face |
| 2b | Groove |
| 2c | Slot in Rotor |
| 3 | Solenoid |
| 3A | Lever |
| 4 | Cover |
| 5 | Optical Housing |
| 6 | Peripheral Lock Opener Button |
| 7 | Second Micro-Switch |
| 8 | First Micro-Switch |
| 9 | Actuation Cable |
| 10 | Cable Clamp |
| 11 | Solenoid Cover |
| 12 | Lock Bar |
| 13 | Housing |
| 14 | Rotary Actuator |
| 14a | Projections in Rotary Actuator |
| 14b | Central Hole in Rotary Actuator |
| 15 | Resilient Means |
| 16 | Slide Plate |
| 17 | Electrical Switch |
| 18 | Lever Spring |

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "having" should be interpreted as "having at least," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration and are not intended to be limiting, with the true scope being defined by the following claims.

## Claims

1. A multi- function smart ignition lock for vehicles, comprising:
- a housing (13);
- a knob (1) being disposed in the housing;
- a rotor (2) being coupled with the knob (1),
- a lock bar (12) configured to selectively lock/unlock a handle bar of the vehicle,
the rotor (2) being configured to operate the lock bar (12),
wherein the knob (1) is configured: to be rotatable about a longitudinal axis (YY) between a plurality of switching positions; and to be movable along the longitudinal axis (YY) in a downward direction at a predetermined position of the one or more switching positions;
- at least one micro-switch (8);
- a control unit; and
- a solenoid (3) being configured to drive a lever (3A); wherein the lever (3 A) is engageable with rotor (2) to selectively restrict the rotation of the rotor (2); and
- a rotary actuator (14) being selectively engageable with the rotor (2); wherein the rotary actuator (14) is configured to operate one or more peripheral locks of the vehicle;
wherein the knob (1) comprises an actuating face which is its bottom face;
wherein the micro switch (8) is actuated by the actuating face when the knob (1) is pushed in the downward direction along longitudinal axis (Y-Y) by a user;
wherein the microswitch (8), upon being actuated, activates the control unit, the control unit being configured to identify an authentic key through RFID communication;
wherein the control unit actuates the solenoid (3) upon identification an authentic key;
wherein the solenoid (3), upon actuation, drives the lever (3A) to a disengaged position with respect to a slot (2c) of the rotor (2); the rotor (2) being rotatable in the disengaged position of the lever (3A);
wherein the rotor (2) comprises slot faces (2a) to operationally disengage with the rotary actuator (14);
wherein the rotor (2) comprises a cam shaft, wherein the cam shaft is selectively engageable with the rotary actuator (14) through a plurality of projections (14a) being formed in a central hole (14b) of the rotary actuator (14).

2. The ignition lock as claimed in claim 1, wherein the rotor (2) comprises slots extending downwardly along the longitudinal axis (Y-Y).

3. The ignition lock as claimed in claim 1, wherein the rotary actuator (14) is connected with an actuation cable (9) for operating the one or more peripheral locks of the vehicle.

4. The ignition lock as claimed in claim 1, wherein a cam shaft of the rotor (2) is connected to a slide plate (16), the slide plate (16) being configured to translate linearly upon rotation of the rotor (2).

5. The ignition lock as claimed in claims 1 and 3, wherein a slide plate (16) is connected with the lock bar (12); and is configured to operate the lock bar (12) translationally upon rotary movement of the rotor (2).

6. The ignition lock as claimed in claim 1, wherein the lever (3 A) is energized by lever spring (18) to be normally engaged in slot (2c) of the rotor (2), the rotor (2) being restricted from rotating in the engaged position of the lever (3A).

## Patentansprüche

1. Intelligentes Multifunktions-Zündschloss für Fahrzeuge, umfassend:
- ein Gehäuse (13);
- einen Knopf (1), der in dem Gehäuse angeordnet ist;
- einen Rotor (2), der mit dem Knopf (1) gekoppelt ist,
- eine Verriegelungsstange (12), die dazu konfiguriert ist, eine Lenkstange des Fahrzeugs selektiv zu verriegeln/entriegeln,
wobei der Rotor (2) dazu konfiguriert ist, die Verriegelungsstange (12) zu betätigen,
wobei der Knopf (1) dazu konfiguriert ist, um eine Längsachse (YY) zwischen einer Mehrzahl von Schaltpositionen drehbar zu sein; und sich entlang der Längsachse (YY) in einer Abwärtsrichtung an einer vorgegebenen Position der einen oder mehreren Schaltpositionen beweglich zu sein;
- mindestens einen Mikroschalter (8);
- eine Steuereinheit; und
- ein Solenoid (3), das dazu konfiguriert ist, einen Hebel (3A) anzutreiben; wobei der Hebel (3A) mit dem Rotor (2) in Eingriff gebracht werden kann, um die Drehung des Rotors (2) selektiv zu beschränken; und
- einen Drehaktuator (14), der selektiv mit dem Rotor (2) in Eingriff gebracht werden kann; wobei der Drehaktuator (14) dazu konfiguriert ist, ein oder mehrere peripherische Schlösser des Fahrzeugs zu betätigen;
wobei der Knopf (1) eine Betätigungsfläche umfasst, die seine Unterseite ist;
wobei der Mikroschalter (8) durch die Betätigungsfläche betätigt wird, wenn der Knopf (1) durch einen Benutzer entlang der Längsachse (Y-Y) in die Abwärtsrichtung gedrückt wird;
wobei der Mikroschalter (8) bei Betätigung die Steuereinheit betätigt, wobei die Steuereinheit dazu konfiguriert ist, einen authentischen Schlüssel mittels RFID-Kommunikation zu identifizieren;
wobei die Steuereinheit das Solenoid (3) bei Identifikation eines authentischen Schlüssels betätigt;
wobei das Solenoid (3), wenn er betätigt wird, den Hebel (3A) in eine ausgelöste Position in Bezug auf einen Schlitz (2c) des Rotors (2) leitet; wobei der Rotor (2) in der ausgelösten Position des Hebels (3A) drehbar ist;
wobei der Rotor (2) Schlitzflächen (2a) umfasst, um operativ von dem Drehaktuator (14) getrennt zu werden;
wobei der Rotor (2) eine Nockenwelle umfasst, wobei die Nockenwelle selektiv mit dem Drehaktuator (14) durch eine Mehrzahl von Vorsprüngen (14a), die in einer Zentralbohrung (14b) des Drehaktuators (14) ausgebildet sind, in Eingriff gebracht werden können.

2. Zündschloss nach Anspruch 1, wobei der Rotor (2) Schlitze umfasst, die sich entlang der Längsachse (Y-Y) nach unten erstrecken.

3. Zündschloss nach Anspruch 1, wobei der Drehaktuator (14) mit einem Betätigungskabel (9) verbunden ist, um das eine oder die mehreren peripherischen Schlösser des Fahrzeugs zu betätigen.

4. Zündschloss nach Anspruch 1, wobei eine Nockenwelle des Rotors (2) mit einer Gleitplatte (16) verbunden ist, wobei die Gleitplatte (16) dazu konfiguriert ist, sich bei Drehung des Rotors (2) linear zu verschieben.

5. Zündschloss nach den Ansprüchen 1 und 3, wobei eine Gleitplatte (16) mit der Verriegelungsstange (12) verbunden ist; und dazu konfiguriert ist, die Verriegelungsstange (12) bei Drehbewegung des Rotors (2) verschiebbar zu betätigen.

6. Zündschloss nach Anspruch 1, wobei der Hebel (3A) durch eine Hebelfeder (18) mit Energie versorgt wird, um normalerweise in dem Schlitz (2c) des Rotors (2) in Eingriff zu stehen, wobei die Drehung des Rotors (2) in der in Eingriff stehenden Position des Hebels (3A) begrenzt wird.

## Revendications

1. Verrou d'allumage intelligent multifonction pour véhicules, comprenant :
- un boîtier (13) ;
- un bouton (1) disposé dans le boîtier ;
- un rotor (2) couplé avec le bouton (1),
- une barre de verrouillage (12) configurée pour verrouiller/déverrouiller sélectivement un guidon du véhicule,
le rotor (2) étant configuré pour actionner la barre de verrouillage (12),
lequel bouton (1) est configuré : pour pouvoir tourner autour d'un axe longitudinal (YY) entre une pluralité de positions de commutation ; et pour pouvoir se déplacer le long de l'axe longitudinal (YY) dans une direction vers le bas à une position prédéterminée de la ou des positions de commutation ;
- au moins un micro-interrupteur (8) ;
- une unité de commande ; et
- un solénoïde (3) étant configuré pour entraîner un levier (3A) ; lequel levier (3A) est apte à venir en prise avec le rotor (2) pour restreindre sélectivement la rotation du rotor (2) ; et
- un actionneur rotatif (14) apte à venir en prise sélectivement avec le rotor (2) ; lequel actionneur rotatif (14) est configuré pour actionner un ou plusieurs verrous périphériques du véhicule ;
Dans lequel le bouton (1) comprend une face d'actionnement qui est sa face inférieure ;
Dans lequel le micro-interrupteur (8) est actionné par la face d'actionnement lorsque le bouton (1) est enfoncé vers le bas le long de l'axe longitudinal (Y-Y) par un utilisateur ;
Dans lequel le micro-interrupteur (8), une fois actionné, active l'unité de commande, l'unité de commande étant configurée pour identifier une clé authentique par communication RFID ;
Dans laquelle l'unité de commande actionne le solénoïde (3) après identification d'une clé authentique ;
Dans lequel le solénoïde (3), une fois actionné, entraîne le levier (3A) vers une position désengagée par rapport à une fente (2c) du rotor (2) ; le rotor (2) pouvant tourner dans la position désengagée du levier (3A) ;
Dans lequel le rotor (2) comprend des faces de fente (2a) destinées à se désengager opérationnellement de l'actionneur rotatif (14) ;
Dans lequel le rotor (2) comprend un arbre à cames, Dans lequel l'arbre à cames est apte à venir en prise sélectivement avec l'actionneur rotatif (14) par une pluralité de saillies (14a) formées dans un trou central (14b) de l'actionneur rotatif (14).

2. Verrou d'allumage selon la revendication 1, dans lequel le rotor (2) comprend des fentes s'étendant vers le bas le long de l'axe longitudinal (Y-Y).

3. Verrou d'allumage selon la revendication 1, dans lequel l'actionneur rotatif (14) est connecté à un câble d'actionnement (9) pour actionner le ou les verrous périphériques du véhicule.

4. Verrou d'allumage selon la revendication 1, dans lequel un arbre à cames du rotor (2) est connecté à une plaque coulissante (16), la plaque coulissante (16) étant configurée pour se translater linéairement lors de la rotation du rotor (2).

5. Verrou d'allumage selon les revendications 1 et 3, dans lequel une plaque coulissante (16) est connectée à la barre de verrouillage (12) ; et est configurée pour actionner la barre de verrouillage (12) de manière translationnelle lors du mouvement rotatif du rotor (2).

6. Verrou d'allumage selon la revendication 1, dans lequel le levier (3A) est sollicité par un ressort de levier (18) pour être normalement engagé dans la fente (2c) du rotor (2), le rotor (2) étant empêché de tourner dans la position engagée du levier (3A).
